# EUROPEAN PATENT SPECIFICATION

(11) **EP 3 552 796 B1**
(45) Date of publication and mention of the grant of the patent: **08.12.2021**
(21) Application number: 18186960.3
(22) Date of filing: 02.08.2018
(51) Int. Cl.: B29C 45/76, B29C 45/77, B29C 45/78

(54) **INJECTION MOLDING APPARATUS AND INJECTION MOLDING METHOD**
SPRITZGIESSVERFAHREN UND SPRITZGIESSVORRICHTUNG
APPAREIL DE MOULAGE PAR INJECTION ET PROCÉDÉ DE MOULAGE PAR INJECTION

(30) Priority: 10.04.2018 TW 107112325
(43) Date of publication of application: 16.10.2019
(73) Proprietor: Chung Yuan Christian University, Taoyuan City 32023 (TW)
(72) Inventor: CHEN, Shia-Chung, 32023 Taoyuan City (TW); CHANG, Yung-Hsiang, 32023 Taoyuan City (TW); LOU, Ying-Fan, 32023 Taoyuan City (TW)
(74) Representative: Ter Meer Steinmeister & Partner

(56) References cited:
- CN-Y- 201 002 333
- DE-A1- 3 608 973
- JP-A- H04 148 911
- JP-A- S62 156 920
- US-A- 4 816 197
- US-A1- 2011 101 555
- US-A1- 2015 336 316

## Description

### BACKGROUND

### [Technical Field]

The disclosure relates to a molding apparatus and a molding method, and particularly relates to an injection molding apparatus and an injection molding method.

### [Description of Related Art]

Injection molding is a process of manufacturing parts made of thermoplastic plastic or thermosetting plastic. A plastic material in a cylinder of an injection molding machine is heated and melted to be in a flowing state. Then under the pressure of a plunger or a screw stem, the plastic material is compressed and moved forward so as to pass through a nozzle at the front of the cylinder to be rapidly injected into a closed mold with a lower temperature. After a period of cooling and setting, the mold is then opened, and thus is obtained an injection molding product.

In the process of injection molding, factors such as an injection pressure, a temperature of the mold, a pressure holding time and an environmental temperature all affect the specific volume of the plastic material in the mold, and the quality of the injection molding product depends on whether or not the specific volume of the plastic material may measure up to expectations. In the case of an existing injection molding machine, the quality of the injection molding product may be roughly estimated through sensing the pressure of the plastic material and the temperature of the mold, and an injection parameter may accordingly be adjusted based on the operator's experiences. However, if the actual specific volume of the plastic material cannot be known for sure, it would be impossible to accurately perform the aforementioned adjustment.

US 2015/336316 A1 describes an in-mold vibratile injection compression molding method and molding apparatus.

DE 36 08 973 A1 relates to a method and an apparatus for controlling the solidification phase in injection molding of thermoplastic molding compositions.

JP S62 156920 A relates to an injection compression molding device and a compression molding method to prevent unevenness in intermolecular bonding force and plastic deformation, by a method wherein a molded article is cooled so that every part of the same shows a uniform temperature during solidification.

US 4 816 197 A relates to a method for implementing PVT control of an injection molding operation, wherein the pack time and hold time are dynamically adjusted based on sensing parameters related to melt temperature.

JP H04 148911 A relates to method and apparatus for controlling dwell in injection molding.

US 2011/101555 A1 relates to a method for use in forming a molded part includes providing a mold having a cavity and a movable pin, injecting a moldable material into the cavity, biasing the movable pin to maintain an end of the movable pin in contact with the moldable material in the cavity during the curing of the moldable material and until the moldable material is cured, and monitoring movement of the biased movable pin during curing of the moldable material in the mold.

CN 201 002 333 Y relates a device to test the relationship of polymerized substance, pressure and specific capacity in online mode, which includes a mold, a pressure sensor, a temperature sensor, a position sensor, a heating rod and a die cavity switch.

### SUMMARY

The above identified objectives are solved by the features of the independent claims. Advantageous embodiments are derived from the respective dependent claims.

This disclosure provides an injection molding apparatus and an injection molding method that improve the quality of injection molding products.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic view of an injection molding apparatus according to an embodiment which does not form part of the invention.
FIG. 2 is a flowchart showing an injection molding method according to an embodiment of the disclosure.
FIG. 3 is a block diagram of some components of the injection molding apparatus of FIG. 1.
FIG. 4 is a partial schematic view of an injection molding apparatus according to another embodiment which does not form part of the invention.
FIG. 5 is a partial schematic view of an injection molding apparatus according to the invention.
FIG. 6 is a partial schematic view of an injection molding apparatus according to another embodiment which does not form part of the invention.

### DESCRIPTION OF THE EMBODIMENTS

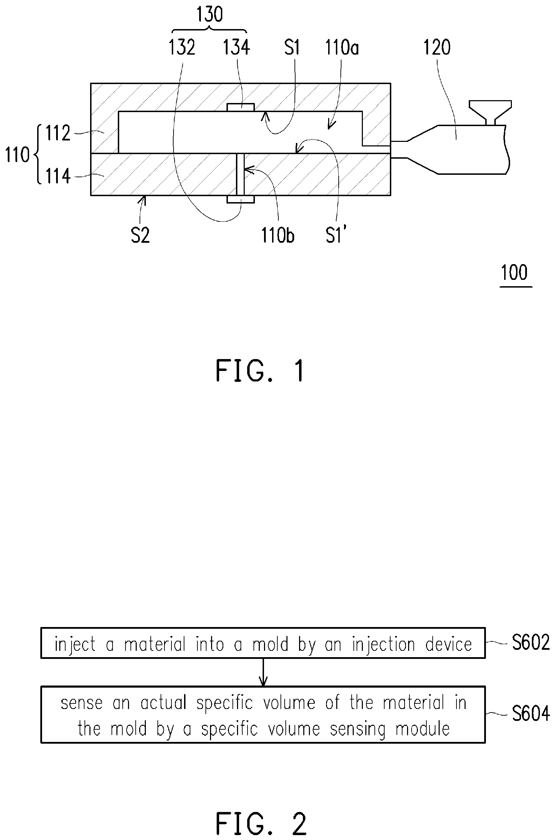

FIG. 1 is a schematic view of an injection molding apparatus according to an embodiment of the disclosure. With reference to FIG. 1, an injection molding apparatus 100 of this embodiment includes a mold 110, an injection device 120 and a specific volume sensing module 130. The mold 110 is composed of an upper mold 112 and a lower mold 114. As shown in FIG. 1, the upper mold 112 and the lower mold 114, when closed with respect to each other, define a mold cavity 110a. The injection device 120 is adapted to inject a material (such as a plastic material) into the mold cavity 110a of the mold 110. At least parts of the specific volume sensing module 130 are disposed at the mold 110. The specific volume sensing module 130 is adapted to sense an actual specific volume of the material in the mold 110 so that the injection parameter is accurately adjusted, thereby improving the quality of the injection molding product.

Hereinafter, the primary process of an injection molding method according to an embodiment of the disclosure is described with reference to the drawings. FIG. 2 is a flowchart showing an injection molding method according to an embodiment of the disclosure. With reference to FIG. 2, taking the injection molding apparatus 100 shown in FIG. 1 as an example, first of all, a material is injected into the mold 110 by the injection device 120 (step S602). Then, the actual specific volume of the material in the mold 110 is sensed by the specific volume sensing module 130 (step S604).

In detail, as shown in FIG. 1, the specific volume sensing module 130 in this embodiment includes at least one pressure sensing component 132 and at least one temperature sensing component 134. The pressure sensing component 132 is disposed at the lower mold 114 of the mold 110 and is adapted to sense the pressure of the material in the mold 110. The temperature sensing component 134 is disposed at the mold 110 and is adapted to sense the temperature of the material in the mold 110. Specifically, the temperature sensing component 134 is, for example, an infrared sensor (such as a photoresistor), and the temperature sensing component 134 is disposed at an inner surface S1 of the upper mold 112 of the mold 110 that faces the material so as to be capable of directly sensing the temperature of the material in the mold 110. Besides, the mold 110 has a through-hole 110b, and the through-hole 110b extends from an outer surface S2 of the mold 110 to an inner surface S1' of the lower mold 114 of the mold 110 that faces the material. The pressure sensing component 132 is disposed at the outer surface S2 of the lower mold 114 of the mold 110 and corresponds to the through-hole 110b to directly sense the pressure of the material in the mold 110 by the through-hole 110b. By such configuration, in this embodiment, the temperature sensing component 134 directly senses the temperature of the material in the mold 110 so as to accurately calculate the specific volume value in combination with the pressure value sensed by the pressure sensing component 132. This method is different from the conventional method in which the state of the material is roughly estimated by sensing the temperature of the mold 110 only. In other embodiments, the pressure sensing component 132 and the temperature sensing component 134 may both be disposed at the upper mold 112 or both be disposed at the lower mold 114.

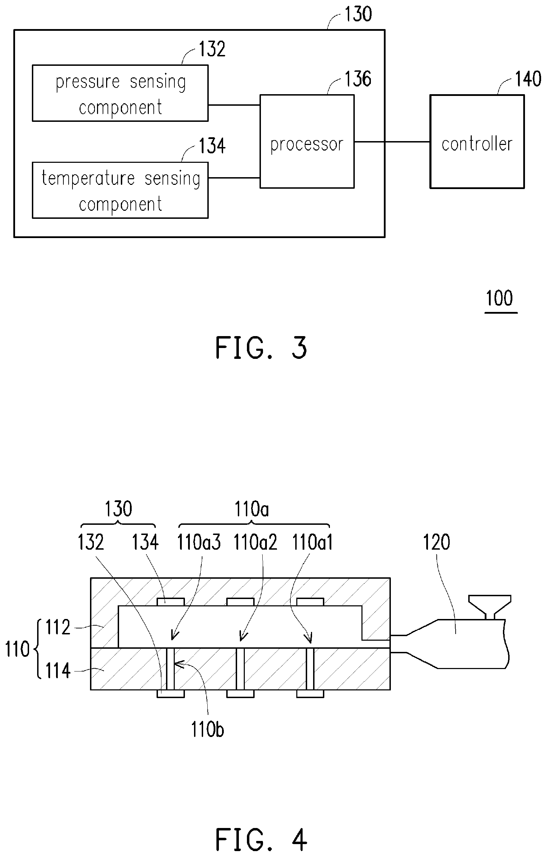

FIG. 3 is a block diagram of some components of the injection molding apparatus of FIG. 1. With reference to FIG. 3, the specific volume sensing module 130 of this embodiment further includes a processor 136. The processor 136 is, for example, a computer or another suitable device with a computing function. The processor 136 is coupled to the pressure sensing component 132 and the temperature sensing component 134, and is adapted to calculate the actual specific volume of the material in the mold 110 according to the pressure of the material in the mold 110 sensed by the pressure sensing component 132 and the temperature of the material in the mold 110 sensed by the temperature sensing component 134. In this embodiment, the pressure value sensed by the pressure sensing component 132 and the temperature value sensed by the temperature sensing component 134 may be stored in a data acquisition card (DAQ card) and then be transmitted to the processor 136. Herein, a signal amplifier may be used to amplify the temperature value signal sensed by the temperature sensing component 134. In addition, the pressure value, the temperature value and the specific volume value may be displayed on a display interface for the operator to see.

With reference to FIG. 3, to be more specific, the injection molding apparatus 100 of this embodiment further includes a controller 140. The controller 140 is, for example, a computer or another suitable device with a control function. The controller 140 is coupled to the processor 136 of the specific volume sensing module 130, and is adapted to adjust an injection molding parameter of the injection molding apparatus 100 according to the actual specific volume of the material in the mold 110 calculated by the processor 136. The injection molding parameter may include an injection pressure of the injection device 120, a temperature of the mold 110, and a pressure holding time performed by the injection device 120. The pressure holding refers to the state in which the injection device 120, after injecting the material into the mold 110, continues to apply appropriate injection pressure to provide a proper amount of materials into the mold 110 until the materials in the mold 110 are solidified. As a result, the shrinkage of the materials in the mold 110 during the solidification process that results in an undesired size of the injection molding product may be prevented.

In this embodiment, during the process in which the injection device 120 injects the material into the mold 110, the specific volume sensing module 130, for example, senses the actual specific volume of the material in the mold 110 many times at a predetermined time interval. For example, the pressure sensing component 132 may be set to sense the pressure of the material in the mold 110 every 0.04 seconds, and the temperature sensing component 134 may be set to sense the temperature of the material in the mold 110 every 0.04 seconds. Accordingly, the processor 136 may calculate the current actual specific volume of the material in the mold 110 every 0.04 seconds, and may continuously and instantly transmit these actual specific volume values to the controller 140 so that the controller 140 may continuously adjust the injection pressure of the injection device 120, the temperature of the mold 110 and the pressure holding time performed by the injection device 120 during the process in which the injection device 120 injects the material into the mold 110. In other embodiments, the time interval may be of a different time length, and the disclosure is not limited thereto. In other embodiments, the controller 140 may further adjust the parameter of the next injection molding process according to the actual specific volume of the material in the mold 110. In addition, in other embodiments, the injection molding apparatus 100 may not have a controller, and after the processor 136 calculates the actual specific volume of the material in the mold 110, the operator may manually adjust the parameter accordingly.

The shape of the mold cavity 110a of the mold 110 and the configuration of the pressure sensing component 132 and the temperature sensing component 134 as shown in FIG. 1 are only schematic examples, and variations thereof are described hereinafter with reference to the drawings.

FIG. 4 is a partial schematic view of an injection molding apparatus according to another embodiment of the disclosure. The difference between the embodiment shown in FIG. 4 and the embodiment shown in FIG. 1 is that there are a plurality of pressure sensing components 132 (shown as three) and a plurality of temperature sensing components 134 (shown as three) in FIG. 4. These pressure sensing components 132 respectively correspond to a plurality of positions 110a1, 110a2 and 110a3 of a mold cavity 110a of a mold 110 so as to respectively sense the pressures of the material in the mold 110 that correspond to the positions 110a1, 110a2 and 110a3. Similarly, these temperature sensing components 134 respectively correspond to the positions 110a1, 110a2 and 110a3 of the mold cavity 110a of the mold 110 so as to respectively sense the temperatures of the material in the mold 110 that correspond to the positions 110a1, 110a2 and 110a3. Accordingly, the specific volumes of the material in the mold 110 at the positions 110a1, 110a2 and 110a3 may be calculated so that the parameter is adjusted in a more comprehensive manner.

Specifically, the parameter may be adjusted to achieve a desired value according to the specific volume of the material at the position 110a3, and it is then determined accordingly whether the material at the position 110a3 has solidified or not. After the material at the position 110a3 solidifies, the parameter is adjusted to achieve a desired value according to the specific volume of the material at the position 110a2, and it is then determined accordingly whether the material at the position 110a2 has solidified or not. After the material at the position 110a2 solidifies, the parameter is adjusted to achieve a desired value according to the specific volume of the material at the position 110a1, and it is then determined accordingly whether the material at the position 110a1 has solidified or not. As described above, the parameter is adjusted sequentially and segmentally in correspondence to the material at different positions in the mold 110, thereby ensuring that the specific volumes of the injection molding product at these positions are the same to further improve the quality of the product.

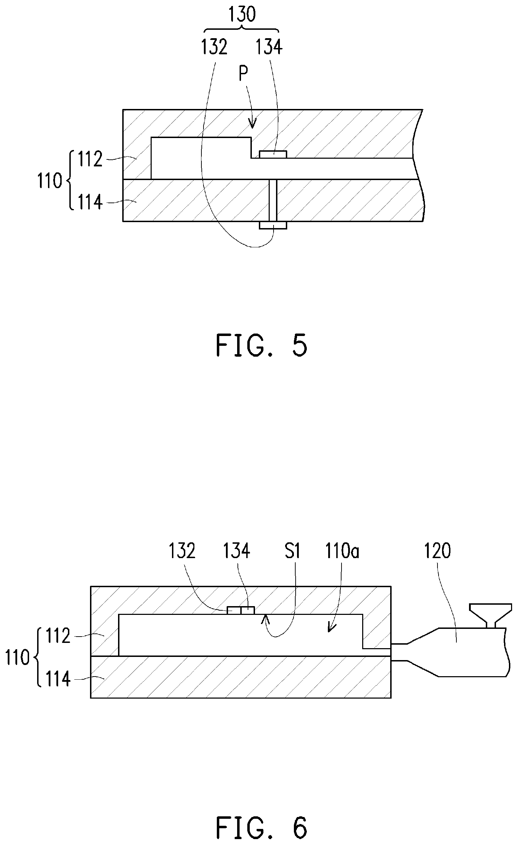

FIG. 5 is a partial schematic view of an injection molding apparatus according to the invention. As shown in FIG. 5, there is a significant change in the shape of a mold cavity of a mold 110 at a position P, so that there is a higher probability that the specific volume of the material here is not as expected. Therefore, a pressure sensing component 132 and a temperature sensing component 134 may be disposed at the position P as shown in FIG. 5 to effectively monitor the specific volume of the material here.

FIG. 6 is a partial schematic view of an injection molding apparatus according to another embodiment of the disclosure. In the embodiment shown in FIG. 6, a temperature sensing component 134 and a pressure sensing component 132 are integrated into a sensor that is disposed at an inner surface S1 of a mold 110. In this way, the installation process of the temperature sensing component 134 and the pressure sensing component 132 may be simplified.

### [Reference Signs List]

- 100:: injection molding apparatus
- 110:: mold
- 110a:: mold cavity
- 110a1, 110a2, 110a3, P:: position
- 110b:: through-hole
- 112:: upper mold
- 114:: lower mold
- 120:: injection device
- 130:: specific volume sensing module
- 132:: pressure sensing component
- 134:: temperature sensing component
- 136:: processor
- 140:: controller
- S1, S1':: inner surface
- S2:: outer surface

## Claims

1. An injection molding apparatus (100), comprising:
a mold (110);
an injection device (120) adapted to inject a material into the mold (110); and
a specific volume sensing module (130), wherein at least parts of the specific volume sensing module (130) are disposed at the mold (110), and the specific volume sensing module (130) is adapted to sense an actual specific volume of the material in the mold (110),
wherein the specific volume sensing module (130) comprises at least one pressure sensing component (132) and at least one temperature sensing component (134), the at least one pressure sensing component (132) is disposed at the mold (110) and is adapted to sense a pressure of the material in the mold (110), and the at least one temperature sensing component (134) is disposed at the mold (110) and is adapted to sense a temperature of the material in the mold (110),
**characterized in that** the at least one temperature sensing component (134) and the at least one pressure sensing component (132) are disposed at a position (P), wherein there is a change in the shape of a mold cavity of the mold (110) at the position (P).

2. The injection molding apparatus (100) as recited in claim 1, wherein the specific volume sensing module (130) comprises a processor (136), wherein the processor (136) is coupled to the at least one pressure sensing component (132) and the at least one temperature sensing component (134), and is adapted to calculate the actual specific volume of the material in the mold (110) according to the pressure of the material in the mold (110) and the temperature of the material in the mold (110).

3. The injection molding apparatus (100) as recited in claim 1, wherein the at least one pressure sensing component (132) is plural in number and the at least one temperature sensing component (134) is plural in number, wherein the plurality of pressure sensing components (132) respectively correspond to a plurality of positions of the mold (110) so as to respectively sense the pressure of the material in the mold (110) that correspond to the plurality of positions, and the plurality of temperature sensing components (134) respectively correspond to the plurality of positions of the mold (110) so as to respectively sense the temperature of the material in the mold (110) that correspond to the plurality of positions.

4. The injection molding apparatus (100) as recited in claim 1, wherein the at least one temperature sensing component (134) is disposed at the inner surface (S1, S1') of the mold (110).

5. The injection molding apparatus (100) as recited in claim 1, wherein the mold (110) has a through-hole (110b) extending from an outer surface (S2) of the mold (110) to the inner surface (S1, S1') of the mold (110), and the at least one pressure sensing component (132) is disposed at the outer surface (S2) of the mold (110) and corresponds to the through-hole (110b).

6. The injection molding apparatus (100) as recited in claim 1, comprising a controller (140), wherein the controller (140) is coupled to the specific volume sensing module (130), and is adapted to adjust at least one injection molding parameter of the injection molding apparatus (100) according to the actual specific volume of the material in the mold (110).

7. The injection molding apparatus (100) as recited in claim 6, wherein the at least one injection molding parameter comprises an injection pressure of the injection device (120), a temperature of the mold (110), and a pressure holding time performed by the injection device (120).

8. The injection molding apparatus (100) as recited in claim 1, wherein during the process in which the injection device (120) injects the material into the mold (110), the specific volume sensing module (130) is adapted to sense the actual specific volume of the material in the mold (110) many times at a predetermined time interval.

9. An injection molding method, comprising:
injecting a material into a mold (110) by an injection device (120);
sensing an actual specific volume of the material in the mold (110) by a specific volume sensing module (130);
sensing a pressure of the material in the mold (110) by at least one pressure sensing component (132); and
sensing a temperature of the material in the mold (110) by at least one temperature sensing component (134),
wherein the specific volume sensing module (130) includes the at least one pressure sensing component (132) and the at least one temperature sensing component (134),
**characterized in that** the at least one temperature sensing component (134) and the at least one pressure sensing component (132) are disposed at a position (P), wherein there is a change in the shape of a mold cavity of the mold (110) at the position (P).

10. The injection molding method as recited in claim 9, comprising by a processor (136), calculating the actual specific volume of the material in the mold (110) according to the pressure of the material in the mold (110) and the temperature of the material in the mold (110).

11. The injection molding method as recited in claim 9, wherein the at least one pressure sensing component (132) is plural in number and the at least one temperature sensing component (134) is plural in number, the injection molding method comprising:
by the plurality of pressure sensing components (132), respectively sensing the pressure of the material in the mold (110) that correspond to a plurality of positions; and
by the plurality of temperature sensing components (134), respectively sensing the temperature of the material in the mold (110) that correspond to the plurality of positions.

12. The injection molding method as recited in claim 9, comprising by a controller (140), adjusting at least one injection molding parameter according to the specific volume of the material in the mold (110).

13. The injection molding method as recited in claim 12, wherein the at least one injection molding parameter comprises an injection pressure of the injection device (120), a temperature of the mold (110), and a pressure holding time performed by the injection device (120).

14. The injection molding method as recited in claim 9, comprising during the process in which the injection device (120) injects the material into the mold (110), sensing the specific volume of the material in the mold (110) many times at a predetermined time interval by the specific volume sensing module (130).

## Patentansprüche

1. Spritzgussvorrichtung (100), die Folgendes umfasst:
eine Gießform (110);
eine Einspritzvorrichtung (120), die dafür ausgelegt ist, ein Material in die Gießform (110) einzuspritzen; und
ein Modul (130) zum Erfassen eines spezifischen Volumens, wobei zumindest Teile des Moduls (130) zum Erfassen eines spezifischen Volumens an der Gießform (110) angeordnet sind und das Modul (130) zum Erfassen eines spezifischen Volumens dafür ausgelegt ist, ein tatsächliches spezifisches Volumen des Materials in der Gießform (110) zu erfassen,
wobei das Modul (130) zum Erfassen eines spezifischen Volumens mindestens eine Druckmesskomponente (132) und mindestens eine Temperaturmesskomponente (134) umfasst, wobei die mindestens eine Druckmesskomponente (132) an der Gießform (110) angeordnet ist und dafür ausgelegt ist, einen Druck des Materials in der Gießform (110) zu messen, und die mindestens eine Temperaturmesskomponente (134) an der Gießform (110) angeordnet ist und dafür ausgelegt ist, eine Temperatur des Materials in der Gießform (110) zu messen,
**dadurch gekennzeichnet, dass** die mindestens eine Temperaturmesskomponente (134) und die mindestens eine Druckmesskomponente (132) an einer Position (P) angeordnet sind, wobei an der Position (P) eine Änderung in der Form eines Gießformhohlraums der Gießform (110) vorhanden ist.

2. Spritzgussvorrichtung (100) nach Anspruch 1, wobei das Modul (130) zum Erfassen eines spezifischen Volumens einen Prozessor (136) umfasst, wobei der Prozessor (136) an die mindestens eine Druckmesskomponente (132) und die mindestens eine Temperaturmesskomponente (134) gekoppelt ist, und dafür ausgelegt ist, das tatsächliche spezifische Volumen des Materials in der Gießform (110) entsprechend dem Druck des Materials in der Gießform (110) und der Temperatur des Materials in der Gießform (110) zu berechnen.

3. Spritzgussvorrichtung (100) nach Anspruch 1, wobei die mindestens eine Druckmesskomponente (132) mehrfach vorhanden ist und die mindestens eine Temperaturmesskomponente (134) mehrfach vorhanden ist, wobei die mehreren Druckmesskomponenten (132) jeweils mehreren Positionen der Gießform (110) entsprechen, um jeweils den Druck des Materials in der Form (110) zu messen, der den mehreren Positionen entspricht, und die mehreren Temperaturmesskomponenten (134) jeweils den mehreren Positionen der Gießform (110) entsprechen, um jeweils die Temperatur des Materials in der Form (110) zu messen, die den mehreren Positionen entspricht.

4. Spritzgussvorrichtung (100) nach Anspruch 1, wobei die mindestens eine Temperaturmesskomponente (134) an der Innenfläche (S1, S1') der Gießform (110) angeordnet ist.

5. Spritzgussvorrichtung (100) nach Anspruch 1, wobei die Gießform (110) ein Durchgangsloch (110b) aufweist, das sich von einer Außenfläche (S2) der Gießform (110) zu der Innenfläche (S1, S1') der Gießform (110) erstreckt, und die mindestens eine Druckmesskomponente (132) an der Außenfläche (S2) der Gießform (110) angeordnet ist und dem Durchgangsloch (110b) entspricht.

6. Spritzgussvorrichtung (100) nach Anspruch 1, die eine Steuereinrichtung (140) umfasst, wobei die Steuereinrichtung (140) an das Modul (130) zum Erfassen eines spezifischen Volumens gekoppelt ist und dafür ausgelegt ist, mindestens einen Spritzgussparameter der Spritzgussvorrichtung (100) gemäß dem tatsächlichen spezifischen Volumen (100) des Materials in der Gießform (110) einzustellen.

7. Spritzgussvorrichtung (100) nach Anspruch 6, wobei der mindestens eine Spritzgussparameter einen Einspritzdruck der Einspritzvorrichtung (120), eine Temperatur der Gießform (110) und eine Druckhaltezeit, die durch die Einspritzvorrichtung (120) durchgeführt wird, umfasst.

8. Spritzgussvorrichtung (100) nach Anspruch 1, wobei während des Prozesses, in dem die Einspritzvorrichtung (120) das Material in die Gießform (110) einspritzt, das Modul (130) zum Erfassen eines spezifischen Volumens dafür ausgelegt ist, das tatsächliche spezifische Volumen des Materials in der Gießform (110) mit einem vorgegebenen Zeitintervall mehrmals zu messen.

9. Spritzgussverfahren, das Folgendes umfasst:
Einspritzen eines Materials in eine Gießform (110) durch eine Einspritzvorrichtung (120);
Messen eines tatsächlichen spezifischen Volumens des Materials in der Gießform (110) durch ein Modul (130) zum Erfassen eines spezifischen Volumens;
Messen eines Drucks des Materials in der Gießform (110) durch mindestens eine Druckmesskomponente (132); und
Messen einer Temperatur des Materials in der Gießform (110) durch mindestens eine Temperaturmesskomponente (134),
wobei das Modul (130) zum Erfassen eines spezifischen Volumens die mindestens eine Druckmesskomponente (132) und die mindestens eine Temperaturmesskomponente (134) enthält,
**dadurch gekennzeichnet, dass** die mindestens eine Temperaturmesskomponente (134) und die mindestens eine Druckmesskomponente (132) an einer Position (P) angeordnet sind, wobei an der Position (P) eine Änderung in der Form eines Gießformhohlraums der Gießform (110) vorhanden ist.

10. Spritzgussverfahren nach Anspruch 9, das das Berechnen des tatsächlichen spezifischen Volumens des Materials in der Gießform (110) entsprechend dem Druck des Materials in der Gießform (110) und der Temperatur des Materials in der Gießform (110) durch einen Prozessor (136) umfasst.

11. Spritzgussverfahren nach Anspruch 9, wobei die mindestens eine Druckmesskomponente (132) mehrfach vorhanden ist und die mindestens eine Temperaturmesskomponente (134) mehrfach vorhanden ist, wobei das Spritzgussverfahren Folgendes umfasst:
durch die mehreren Druckmesskomponenten (132) jeweils Messen des Drucks des Materials in der Gießform (110), der den mehreren Positionen entspricht; und
durch die mehreren Temperaturmesskomponenten (134) jeweils Messen der Temperatur des Materials in der Gießform (110), die den mehreren Positionen entspricht.

12. Spritzgussverfahren nach Anspruch 9, das das Anpassen mindestens eines Spritzgussparameters entsprechend dem spezifischen Volumen des Materials in der Gießform (110) durch eine Steuereinrichtung (140) umfasst.

13. Spritzgussverfahren nach Anspruch 12, wobei der mindestens eine Spritzgussparameter einen Einspritzdruck der Einspritzvorrichtung (120), eine Temperatur der Gießform (110) und eine Druckhaltezeit, die durch die Einspritzvorrichtung (120) durchgeführt wird, umfasst.

14. Spritzgussverfahren nach Anspruch 9, das während des Prozesses, in dem die Einspritzvorrichtung (120) das Material in die Gießform (110) einspritzt, das mehrmalige Messen des spezifischen Volumens des Materials in der Gießform (110) mit einem vorgegebenen Zeitintervall durch das Modul (130) zum Erfassen eines spezifischen Volumens umfasst.

## Revendications

1. Appareil de moulage par injection (100), comportant :
un moule (110) ;
un dispositif d'injection (120) adapté pour injecter une matière dans le moule (110) ; et
un module de détection de volume spécifique (130), dans lequel au moins des parties du module de détection de volume spécifique (130) sont disposées sur le moule (110), et le module de détection de volume spécifique (130) est adapté pour détecter un volume spécifique réel de la matière dans le moule (110),
dans lequel le module de détection de volume spécifique (130) comporte au moins un composant de détection de pression (132) et au moins un composant de détection de température (134), le au moins un composant de détection de pression (132) est disposé sur le moule (110) et est adapté pour détecter une pression de la matière dans le moule (110), et le au moins un composant de détection de température (134) est disposé sur le moule (110) et est adapté pour détecter une température de la matière dans le moule (110),
**caractérisé en ce que** le au moins un composant de détection de température (134) et le au moins un composant de détection de pression (132) sont disposés à une position (P), dans lequel il y a un changement de la forme d'une cavité de moule du moule (110) à la position (P).

2. Appareil de moulage par injection (100) selon la revendication 1, dans lequel le module de détection de volume spécifique (130) comporte un processeur (136), dans lequel le processeur (136) est couplé au au moins un composant de détection de pression (132) et au au moins un composant de détection de température (134), et est adapté pour calculer le volume spécifique réel de la matière dans le moule (110) en fonction de la pression de la matière dans le moule (110) et de la température de la matière dans le moule (110).

3. Appareil de moulage par injection (100) selon la revendication 1, dans lequel le au moins un composant de détection de pression (132) est en nombre pluriel et le au moins un composant de détection de température (134) est en nombre pluriel, dans lequel la pluralité de composants de détection de pression (132) correspond respectivement à une pluralité de positions du moule (110) de manière à détecter respectivement la pression de la matière dans le moule (110) qui correspond à la pluralité de positions, et la pluralité de composants de détection de température (134) correspond respectivement à la pluralité de positions du moule (110) de manière à détecter respectivement la température de la matière dans le moule (110) qui correspond à la pluralité de positions.

4. Appareil de moulage par injection (100) selon la revendication 1, dans lequel le au moins un composant de détection de température (134) est disposé sur la surface intérieure (S1, S1') du moule (110).

5. Appareil de moulage par injection (100) selon la revendication 1, dans lequel le moule (110) a un trou traversant (110b) s'étendant à partir d'une surface extérieure (S2) du moule (110) jusqu'à la surface intérieure (S1, S1') du moule (110), et le au moins un composant de détection de pression (132) est disposé sur la surface extérieure (S2) du moule (110) et correspond au trou traversant (110b).

6. Appareil de moulage par injection (100) selon la revendication 1, comportant une commande (140), dans lequel la commande (140) est couplée au module de détection de volume spécifique (130), et est adaptée pour régler au moins un paramètre de moulage par injection de l'appareil de moulage par injection (100) en fonction du volume spécifique réel de la matière dans le moule (110).

7. Appareil de moulage par injection (100) selon la revendication 6, dans lequel le au moins un paramètre de moulage par injection comporte une pression d'injection du dispositif d'injection (120), une température du moule (110) et un temps de maintien de pression appliqués par le dispositif d'injection (120).

8. Appareil de moulage par injection (100) selon la revendication 1, dans lequel au cours du processus pendant lequel le dispositif d'injection (120) injecte la matière dans le moule (110), le module de détection de volume spécifique (130) est adapté pour détecter à de nombreuses reprises le volume spécifique réel de la matière dans le moule (110) à un intervalle de temps prédéterminé.

9. Procédé de moulage par injection, comportant les étapes consistant à :
injecter une matière dans un moule (110) par un dispositif d'injection (120) ;
détecter un volume spécifique réel de la matière dans le moule (110) par un module de détection de volume spécifique (130) ;
détecter une pression de la matière dans le moule (110) par au moins un composant de détection de pression (132) ; et
détecter une température de la matière dans le moule (110) par au moins un composant de détection de température (134),
dans lequel le module de détection de volume spécifique (130) inclut le au moins un composant de détection de pression (132) et le au moins un composant de détection de température (134),
**caractérisé en ce que** le au moins un composant de détection de température (134) et le au moins un composant de détection de pression (132) sont disposés à une position (P), dans lequel il y a un changement de la forme d'une cavité de moule du moule (110) à la position (P).

10. Procédé de moulage par injection selon la revendication 9, comportant, par l'intermédiaire d'un processeur (136), l'étape consistant à calculer le volume spécifique réel de la matière dans le moule (110) en fonction de la pression de la matière dans le moule (110) et de la température de la matière dans le moule (110).

11. Procédé de moulage par injection selon la revendication 9, dans lequel le au moins un composant de détection de pression (132) est en nombre pluriel et le au moins un composant de détection de température (134) est en nombre pluriel, le procédé de moulage par injection comportant les étapes consistant à :
par l'intermédiaire de la pluralité de composants de détection de pression (132), détecter respectivement la pression de la matière dans le moule (110) qui correspond à la pluralité de positions ; et
par l'intermédiaire de la pluralité de composants de détection de température (134), détecter respectivement la température de la matière dans le moule (110) qui correspond à la pluralité de positions.

12. Procédé de moulage par injection selon la revendication 9, comportant, par l'intermédiaire d'une commande (140), l'étape consistant à régler au moins un paramètre de moulage par injection en fonction du volume spécifique de la matière dans le moule (110).

13. Procédé de moulage par injection selon la revendication 12, dans lequel le au moins un paramètre de moulage par injection comporte une pression d'injection du dispositif d'injection (120), une température du moule (110) et un temps de maintien de pression appliqués par le dispositif d'injection (120).

14. Procédé de moulage par injection selon la revendication 9, comportant, au cours du processus pendant lequel le dispositif d'injection (120) injecte la matière dans le moule (110), l'étape consistant à détecter à de nombreuses reprises le volume spécifique de la matière dans le moule (110) à un intervalle de temps prédéterminé, par l'intermédiaire du module de détection de volume spécifique (130).
